# EUROPÄISCHE PATENTANMELDUNG

(11) **EP 1 619 104 A2**
(43) Veröffentlichungstag der Anmeldung: **25.01.2006**
(21) Anmeldenummer: 05106713.0
(22) Anmeldetag: 21.07.2005
(51) Int. Cl.: B62B 3/00, B65G 1/00

(54) **Verfahren zur Kommissionierung und Verbringung von Waren**

(30) Priorität: 23.07.2004 DE 102004035823
(71) Anmelder: SIEMENS AKTIENGESELLSCHAFT, 80333 München (DE); Nestlè Deutschland AG, 60523 Frankfurt (DE)
(72) Erfinder: Bosch, Henning, 88471 Laupheim (DE); Buchmann, Rainer, 63868 Grosswallstadt (DE); Gerstner, Gerald, 67376 Harthausen (DE); Jungbluth, Volker, 63500 Seligenstadt (DE); Reischl, Sigmund, 60594 Frankfurt am Main (DE)
(74) Vertreter: Berg, Peter

(57) **Zusammenfassung**

Beschrieben wird ein Verfahren zur Kommissionierung von Waren, insbesondere von Lebensmitteln, und zur Verbringung der kommissionierten Waren zu einem Einzelhandelsunternehmen. Die Waren werden in Rollcontainern (6) geliefert, die mittels Lastkraftwagen transportiert werden. Die Befüllung der Verkaufsregale erfolgt unmittelbar aus den Rollcontainern heraus. Erfindungsgemäß ist vorgesehen, als Tablarwagen ausgebildete Rollcontainer zu verwenden, deren Seitenwände (8) ein Höhenraster (5) für die Aufnahme einer Mehrzahl von Tablaren (7) im Abstand übereinander aufweisen. Die Kommissionierung der Waren erfolgt auf Tablaren, die anschließend für den Transport in einen Tablarwagen eingeschoben und zum Einzelhandelsunternehmen transportiert werden.

## Beschreibung

Die Erfindung betrifft ein Verfahren zur Kommissionierung von Waren gemäß dem Gattungsbegriff des Patentanspruchs 1.

Einzelhandelsunternehmen müssen in relativ kurzen Abständen immer wieder mit neuen Waren beliefert werden, damit in den Verkaufsräumen ein ausreichendes Warenangebot zur Verfügung gestellt werden kann, da Lagerkapazitäten für größere Warenbestände vor Ort in der Regel nicht verfügbar sind. Insbesondere bei Einzelhandelsketten im Lebensmittelbereich ist es üblich, die für einen Filialbetrieb kommissionierten Waren in so genannten Rollcontainern, die mit Lastkraftwagen transportiert werden, anzuliefern. Eine Lieferung kann dabei pro Filiale durchaus mehrere Rollcontainer umfassen. Die Rollcontainer selbst weisen in der Regel einen festen Boden mit Rädern und zwei als Gitterwände gestaltete, sich gegenüberliegende Seitenwände auf. Die einzelnen Waren unterschiedlichster Art werden auf den Boden des Rollcontainers gelegt bzw. zwischen den Gitterseitenwänden übereinander gestapelt. Nach der Anlieferung können die einzelnen Waren mit dem Rollcontainer zu den Verkaufsregalen transportiert und dort einsortiert werden.

Diese Art der Warenversorgung für Einzelhandelsunternehmen, insbesondere aus der Lebensmittelbranche, ist mit einer Reihe von Nachteilen behaftet. Die für das jeweilige Unternehmen bzw. den jeweiligen Filialbetrieb kommissionierten Waren werden bei ungünstiger Stapelung im Rollcontainer häufig durch darüber liegende Waren zusammengedrückt und beschädigt, so dass sie unansehnlich oder sogar unverkäuflich werden. Zum anderen sind die im Rollcontainer gestapelten Waren im Regelfall nicht so übereinander gestapelt, dass bei der Befüllung der Verkaufsregale jeweils die Ware zu oberst liegt und somit leicht entnehmbar ist, die beim Gang durch die Regalgassen jeweils als nächste benötigt wird. Entweder ist dann ein umständliches Umpacken innerhalb des Rollcontainers oder aber eine Veränderung in der Reihenfolge der Regalauffüllung notwendig, was mit dem Nachteil der Zurücklegung von Zusatzwegen für das Bedienpersonal verbunden ist. Darüber hinaus ist es bisher notwendig, die einzelnen Waren beim Kommissionieren und Verladen auf den Rollcontainer mehrfach zu handhaben.

Aufgabe der vorliegenden Erfindung ist es daher, ein Verfahren der gattungsgemäßen Art dahingehend abzuändern, dass der Gesamtaufwand von der Kommissionierung bis zur Einsortierung der Waren in die Verkaufsregale eines Unternehmens deutlich verringert wird.

Gelöst wird diese Aufgabe erfindungsgemäß durch die im Patentanspruch 1 angegebenen kennzeichnenden Merkmale. Vorteilhafte Weiterbildungen des erfindungsgemäßen Verfahrens ergeben sich aus den Unteransprüchen.

Im Mittelpunkt der vorliegenden Erfindung steht der Gedanke, statt eines üblichen Rollcontainers mit Gitterseitenwänden einen als Tablarwagen ausgebildeten Rollcontainer zu verwenden. Die Tablare eines solchen Tablarwagens werden bereits als Stückgutträger für die Kommissionierung der Waren verwendet. Das bedeutet, dass auf einem Tablar nur solche Waren aus einem Vorratslager abgelegt werden, die genau zu der jeweiligen Kommission für den Empfänger gehören. Vorzugsweise wird die Beladung der Tablare bei der Kommissionierung robotergestützt durchgeführt, um möglichst geringe Handhabungskosten zu verursachen. Selbstverständlich ist alternativ auch eine manuelle Befüllung der Tablare möglich. Dabei werden die verschiedenen Waren jeweils nebeneinander abgelegt. Entsprechend des Umfangs einer Kommission werden gegebenenfalls mehrere Tablare befüllt und dann vorzugsweise ohne zwischenzeitliche Umladung der einzelnen Waren in den Tablarwagen eingeschoben, der für den jeweiligen Empfänger vorgesehen ist. Jeder Tablarwagen weist ein Höhenraster für die Aufnahme einer Mehrzahl von Tablaren im Abstand übereinander auf. Das bedeutet, dass einzelne Tablare entsprechend der Rasterung in unterschiedlichen Höhenabständen einschiebbar sind. Aus diesem Grunde empfiehlt es sich, bei der Befüllung einzelner Tablare möglichst gleich hohe oder annähernd gleich hohe Waren auf ein und demselben Tablar unterzubringen, um im Tablarwagen eine möglichst hohe Volumennutzung erreichen zu können. Es wäre also äußerst ungünstig, wenn man beispielsweise eine Ware mit relativ kleiner Grundfläche und großer Höhe zusammen mit einer Vielzahl von flach ausgebildeten Waren auf demselben Tablar unterbringen würde, da dann das nächst höhere Tablar einen entsprechend großen Abstand von dem darunter liegenden haben müsste.

Weiterhin vorteilhaft ist es, nicht nur die Befüllung der Tablare bei der Kommissionierung, sondern auch die Beladung der Tablarwagen mit den Tablaren robotergestützt vorzunehmen. Dadurch wird der Handhabungsaufwand entsprechend verringert.

Es kann vorkommen, dass die Raumausnutzung auf mehreren Tablarwagen, die für denselben Empfänger (Filiale) bestimmt sind, nur sehr mäßig ist, also einzelne Tablare nur teilbefüllt sind und einzelne Tablareinschübe völlig frei sind. In solchen Fallen ist es vielfach möglich, insbesondere die auf dem Tablarwagen mit dem niedrigsten Befüllungsgrad lagernden Waren auf einen oder mehrere andere Tablarwagen, die zur selben Sendung gehören sollen, umzuverteilen. In Weiterbildung der Erfindung ist daher zur Verbesserung der Ausnutzung der Transportkapazitäten vorgesehen, eine solche Umverteilung manuell oder vorzugsweise automatisiert durchzuführen, wenn eine entsprechende Kontrolle (z.B. mittels Bildauswertung) dies als aussichtsreich erscheinen lässt. Erst danach startet der Transport zu der bzw. den betreffenden Filialen, wobei dieser vorzugsweise mittels Lastkraftwagen durchgeführt wird, die über automatisierte Förderanlagen zum Ausladen der vollen und Einladen der entleerten Tablarwagen verfügen.

Ein großer Vorteil des erfindungsgemäßen Verfahrens liegt in der Verwendung von ein und denselben Tablaren für die Durchführung des Kommissionierarbeitsgangs und des Transports vom Vorratslager zu den Verkaufsregalen des Einzelhandels. Die einzelnen Waren müssen lediglich bei der Herausnahme aus dem Vorratslager entsprechend der jeweiligen Packungseinheit einzeln gegriffen und abgelegt werden. Weitere zwischenzeitliche Handhabungsvorgänge beispielsweise für ein Umpacken sind nicht notwendig. Erst unmittelbar an den Verkaufsregalen werden die einzelnen Waren wieder gehandhabt. Dies ist aber im Vergleich zum bisherigen Stand der Technik in einer erheblich komfortableren Weise möglich. Die Darbietung der einzelnen Waren auf den Tablaren ermöglicht dem Regalbefüller einen praktisch wahlfreien Zugriff auf jede in dem Tablarwagen befindliche Ware, ohne dass ein Umpacken von darüber liegenden anderen Waren erfolgen müsste. Daher kann der Regalbediener ohne jeden Zusatzaufwand die entsprechend seinem vorgesehenen Weg durch die Verkaufsregale jeweils zur Wiederauffüllung anstehenden Artikel unmittelbar aus dem Tablarwagen entnehmen und in das Verkaufsregal einfüllen. Er muss weder ein umständliches Umpacken innerhalb des Tablarwagens vornehmen noch muss er Zusatzwege zurücklegen, um an die Stelle der Verkaufsregale zu gelangen, an denen die gemäß einem Rollcontainer nach dem Stand der Technik jeweils zu oberst liegenden Waren eingeräumt werden sollen. Somit gewährleistet die vorliegende Erfindung eine drastische Reduzierung des gesamten Handhabungsaufwands von der Kommissionierung bis zur Einsortierung der Waren in die Verkaufsregale.

Nachfolgend wird die Erfindung anhand der Zeichnung näher erläutert. Es zeigen:
- Figur 1: einen Rollcontainer gemäß Stand der Technik,
- Figur 2: einen Tablarwagen und
- Figur 3: eine Seitenansicht eines Kommissionierlagers in schematisierter Form.

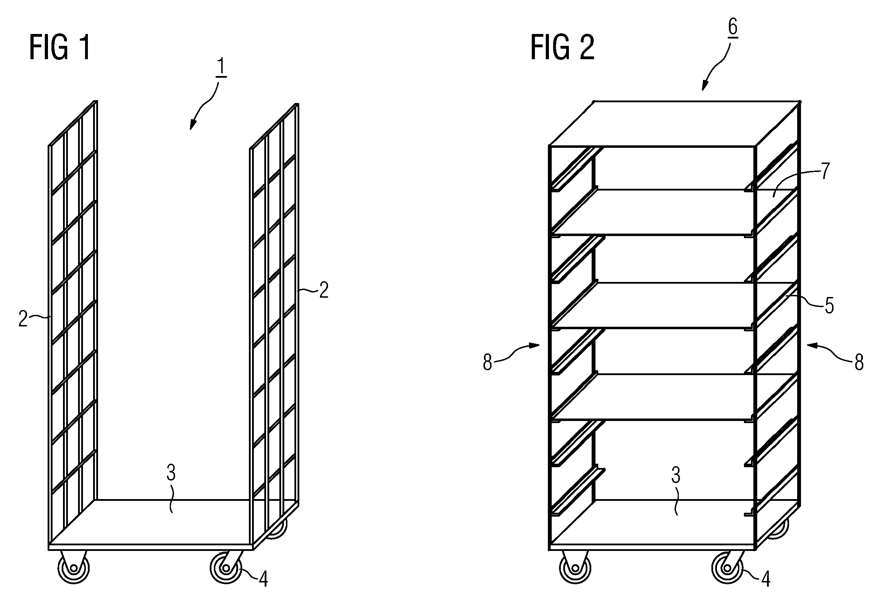

Der in Figur 1 dargestellte Rollcontainer 1, wie er üblicherweise zur Belieferung von Einzelhandelsunternehmen in der Lebensmittelbranche eingesetzt wird, weist einen festen Boden 3 auf, unter dem Räder 4 befestigt sind. An zwei gegenüberliegenden Seiten ist dieser Rollcontainer 1 mit Gitterseitenwänden 2 ausgestattet. Auf dem Boden 3 können nicht dargestellte Waren in beliebiger Weise abgelegt und übereinander gestapelt werden. Durch die Gitterseitenwände 2 ist eine seitliche Stützung gesichert, so dass durch ein Rütteln während des Transports des Rollcontainers 1 keine Waren herunterfallen können.

Im Unterschied hierzu ist der in Figur 2 dargestellte Rollcontainer als Tablarwagen 6 ausgebildet. Dieser verfügt ebenfalls über einen festen Boden 3, unter dem Räder 4 für das Verschieben des Tablarwagens angebracht sind. Die zwei sich gegenüberliegenden Seitenwände 8, die nicht als Gitterseitenwände ausgebildet sind und offen oder geschlossen sein können, sind mit einem festen Raster von Tablarauflagen 5 ausgestattet. Die Tablarauflagen 5 können beispielsweise als L-Profile gestaltet sein und dienen der Aufnahme einer Mehrzahl von Tablaren 7. Die einzelnen Tablare 7 können in entsprechend der Rasterung beliebigen Abständen übereinander eingeschoben werden. Im dargestellten Beispiel mit drei Tablaren 7 entspricht der Höhenabstand des untersten dargestellten Tablars 7 vom Boden 3 dem dreifachen Rastermaß, während die Tablare 7 untereinander jeweils einen Höhenabstand vom zweifachen Rastermaß aufweisen. Je nach Höhe der auf den einzelnen Tablaren aufliegenden Waren kann somit ein möglichst geringer Abstand gewählt werden, um eine gute Volumennutzung zu erreichen. Je kleiner das Rastermaß gewählt wird, umso besser lässt sich eine Anpassung der Höhenabstände an den tatsächlichen Bedarf einstellen. Da die Tablare 7 aus dem Tablarwagen 6 herausziehbar sind, kann ein Regalbefüller, der an der offenen Längsseite des Regalwagens 6 steht, auch aus seiner Sicht hinten liegende Artikel selbst dann noch ergreifen, wenn der nächst höhere Regalboden relativ niedrig aufliegt, weil er das einzelne Tablar 7 problemlos entsprechend weit aus dem Rollwagen 6 herausziehen kann.

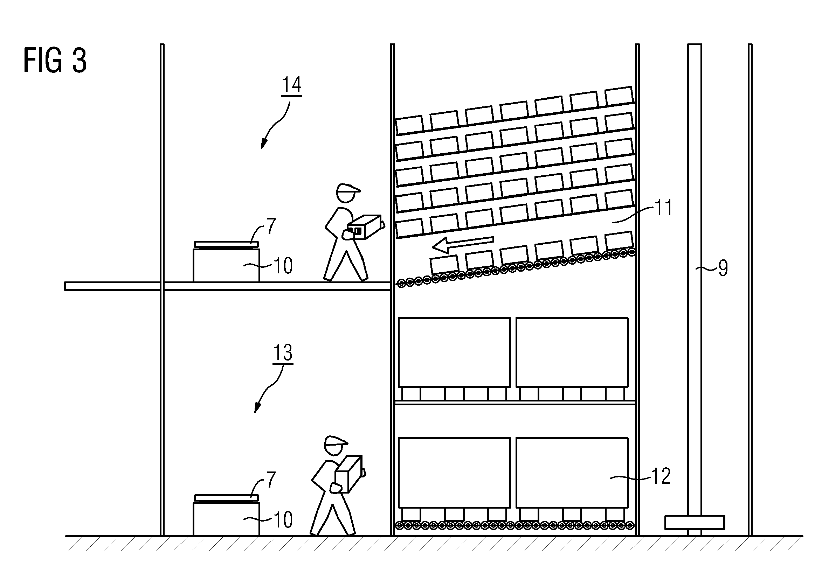

In Figur 3 ist der Kommissionierbereich eines Vorratslagers in der Seitenansicht dargestellt. Die Kommissionierung findet hier auf zwei Ebenen statt. Bei dem Kommissionierarbeitsplatz 13 in der unteren Ebene werden von dem Kommissionierer entsprechend dem Kommissionierauftrag Packungseinheiten von Paletten 12 entnommen und auf einem Tablar 7 abgelegt, welches nach der Beladung über einen Förderer 10 abtransportiert wird, um das Tablar 7 anschließend in einen nicht dargestellten Tablarwagen 6 zu verladen. Die Paletten 12 können mittels eines Regalbediengeräts 9 aus dem Vorratslager entnommen und dem Kommissionierer zur Verfügung gestellt werden. Der Kommissionierarbeitsplatz 14 in der oberen Kommissionierebene ist mit Durchlaufkanälen 11 für kleinteilige Waren bzw. Packungseinheiten versehen, die ebenfalls über das Regalbediengerät 9 zugeführt werden können. Die Verladung der Waren erfolgt in entsprechender Weise wie bei dem unteren Kommissionierarbeitsplatz 13.

## Patentansprüche

1. Verfahren zur Kommissionierung von Waren, insbesondere von Lebensmitteln, und zur Verbringung der kommissionierten Waren zu einem Einzelhandelsunternehmen, wobei die Waren in Rollcontainern, die mit einem Lastkraftwagen transportiert werden, an das jeweilige Einzelhandelsunternehmen geliefert und die Rollcontainer zur Befüllung der Verkaufsregale des Einzelhandelsunternehmens benutzt werden,
**dadurch gekennzeichnet,**
**dass** als Tablarwagen ausgebildete Rollcontainer verwendet werden, deren Seitenwände ein Höhenraster für die Aufnahme einer Mehrzahl von Tablaren im Abstand übereinander aufweisen,
**dass** die Kommissionierung der Waren auf Tablaren erfolgt und
**dass** diese Tablare mit den kommissionierten Waren in einen für das jeweilige Einzelhandelsunternehmen vorgesehenen Tablarwagen eingeschoben und zu diesem Einzelhandelsunternehmen transportiert werden.

2. Verfahren nach Anspruch 1,
**dadurch gekennzeichnet,**
**dass** die bei dem Einzelhandelsunternehmen jeweils angelieferten Waren unmittelbar vom Tablar in die Verkaufsregale eingelagert werden.

3. Verfahren nach einem der Ansprüche 1 - 2,
**dadurch gekennzeichnet,**
**dass** die Befüllung der Tablare bei der Kommissionierung robotergestützt erfolgt.

4. Verfahren nach einem der Ansprüche 1 - 3,
**dadurch gekennzeichnet,**
**dass** die Beladung der Tablarwagen robotergestützt erfolgt.

5. Verfahren nach einem der Ansprüche 1 - 4,
**dadurch gekennzeichnet,**
**dass** zur Erzielung einer möglichst hohen Volumennutzung des Tablarwagen die Befüllung einzelner Tablare möglichst jeweils mit gleich oder annähernd gleich hohen Waren vorgenommen wird.

6. Verfahren nach einem der Ansprüche 1 - 5,
**dadurch gekennzeichnet,**
**dass** die kommissionierten Waren, die auf einem Tablar in einem für das jeweilige Einzelhandelsunternehmen vorgesehenen Tablarwagen eingeschoben wurden, ohne Umladung zu diesen Einzelhandelsunternehmen transportiert werden.

7. Verfahren nach einem der Ansprüche 1 - 5,
**dadurch gekennzeichnet,**
**dass** die kommissionierten Waren auf den Tablaren eines einzelnen Tablarwagens nachträglich auf die Tablare eines oder mehrerer Tablarwagen verteilt wird, die für dasselbe Einzelhandelsunternehmen bestimmt sind.

8. Verfahren nach Anspruch 7"
**dadurch gekennzeichnet,**
**dass** die Verteilung automatisiert erfolgt.

9. Verfahren nach einem der Ansprüche 1 - 8,
**dadurch gekennzeichnet,**
**dass** der Transport der Tablarwagen zu dem jeweiligen Einzelhandelsunternehmen mittels Lastkraftwagen erfolgt und die Entladung des jeweiligen Lastkraftwagens über eine automatisierte Förderanlage erfolgt.
